# EUROPÄISCHE PATENTANMELDUNG

(11) **EP 2 415 340 A1**
(43) Veröffentlichungstag der Anmeldung: **08.02.2012**
(21) Anmeldenummer: 11176766.1
(22) Anmeldetag: 07.08.2011
(51) Int. Cl.: A01C 23/00

(54) **Landwirtschaftliches Gerät mit einer Förderanordnung für flüssigen Wirtschaftsdünger und landwirtschaftliches Gespann**

(30) Priorität: 07.08.2010 DE 102010033746
(71) Anmelder: Zunhammer, Sebastian, 83301 Traunreut (DE)
(72) Erfinder: Zunhammer, Sebastian, 83301 Traunreut (DE)
(74) Vertreter: Heilein, Ernst - Peter

(57) **Zusammenfassung**

Die Erfindung betrifft ein mit einem Traktor verbindbares landwirtschaftliches Gerät mit einer Förderanordnung für flüssigen Wirtschaftsdünger, insbesondere Gülle, mit einem mit Dünger befüllbaren Tank, einem Druckleitungssystem, zumindest einem Verteiler zum Ausbringen des Düngers auf eine landwirtschaftliche Fläche und einer Verdrängerpumpe mit einem definierten Fördervolumen zum Fördern der Gülle zu dem Verteiler, wobei die Verdrängerpumpe über eine drehzahlgeregelte Zapfwelle eines Traktors betreibbar ist, das gekennzeichnet ist durch eine Recheneinrichtung zur Berechnung der Drehzahl der Zapfwelle in Abhängigkeit der auszubringenden Menge an Dünger, der Fahrgeschwindigkeit und der jeweiligen Arbeitsbreite, und durch einen Datenbus zur Übertragung der Daten zu dem Traktor. Die Erfindung betrifft auch ein landwirtschaftliches Gespann mit einem Traktor mit einer drehzahlgeregelten Zapfwelle und einem Gerät mit einer Förderanordnung für flüssigen Wirtschaftsdünger.

## Beschreibung

Die Erfindung betrifft ein landwirtschaftliches Gerät mit einer Förderanordnung für flüssigen Wirtschaftsdünger, insbesondere Gülle, mit einem mit Dünger befüllbaren Tank, einem Druckleitungssystem, zumindest einem Verteiler zum Ausbringen des Düngers auf eine landwirtschaftliche Fläche und einer Verdrängerpumpe mit einem definierten Fördervolumen zum Fördern der Gülle zu dem Verteiler. Die Erfindung betrifft auch ein landwirtschaftliches Gespann mit einem Traktor mit einer drehzahlgeregelten Zapfwelle und einem landwirtschaftlichen Gerät mit einer Förderanordnung für flüssigen Wirtschaftsdünger.

Ein gattungsgemäßes landwirtschaftliches Gerät mit einer Förderanordnung für flüssigen Wirtschaftsdünger ist beispielsweise aus der WO 2008/043502 A1 bekannt. Die Förderanordnung umfasst zumindest einen Flüssigkeitstank, eine Pumpe, zumindest einen 3-Wegehahn oder Schieber und ein Druckleitungssystem, das gegebenenfalls aus einem Ansaugrohr zum Befüllen des Tanks und einer Druckleitung zur Förderung der Gülle aus dem Tank zu einem Verteiler besteht.

Die auszubringende Menge an flüssigem Wirtschaftsdünger ist gesetzlich geregelt, und sollte bedarfsgerecht erfolgen, d.h. eine Über- oder Unterversorgung der landwirtschaftlichen Nutzfläche sollte vermieden werden.

Die auszubringende Menge für eine optimale Versorgung der zu düngenden Nutzfläche kann zunächst in Abhängigkeit der Zusammensetzung des flüssigen Wirtschaftsdüngers berechnet werden. Da es sich, insbesondere bei Gülle, um einen Mehrnährstoffdünger handelt, werden die Nährstoffanteile, insbesondere Stickstoff bestimmt. Dann ist es vorteilhaft Art und Konsistenz der Gülle und schließlich auch Trockenmasse, Phosphat und Kalisalze zu bestimmen.

Steht schließlich die pro Flächeneinheit auszubringende Menge bezogen auf die Inhaltsstoffe fest, kann der Dünger ausgebracht werden. Da jedoch das Ausbringen der Gülle im Fahrbetrieb erfolgt, ist die Fahrgeschwindigkeit des landwirtschaftlichen Geräts und die jeweilige Arbeitsbreite stetig berücksichtigen; d.h. die zum Verteiler des landwirtschaftlichen Geräts geförderte Menge an Gülle ist in Abhängigkeit der Fahrgeschwindigkeit, der jeweiligen Arbeitsbreite und gegebenenfalls weiterer Störgrößen zu regeln.

Eine einfache Mengenregelung der zum Verteiler geförderten Menge kann dabei beispielsweise durch eine sog. Bypass-Regelung erfolgen. Dabei sind in der Förderanordnung vor einem Verteiler zum Ausbringen des Düngers ein Schieber oder ein 3-Wegehahn und ein Durchflussmesser angeordnet. In Abhängigkeit der von dem Durchflussmesser gemessenen Menge, der Fahrgeschwindigkeit und der aktuellen Arbeitsbreite wird dann der Schieber oder 3-Wegehahn mehr oder weniger weit geöffnet, so dass ein erster Teilvolumenstrom in Richtung Verteiler und ein zweiter Teilvolumenstrom zurück in den Flüssigkeitstank geleitet wird.

Die Pumpe, beispielsweise eine Kreiselpumpe oder eine Vakuumpumpe, wird von der Zapfwelle der Zugmaschine angetrieben. Eine serienmäßige Zapfwelle mit einem Zwischengetriebe liefert eine Drehzahl von 540 U/min oder 1000 U/min. Diese Nenndrehzahlen sind genormt. Dies ist nachteilig, da die Pumpe bei dieser Regelungstechnik stets unter Volllast betrieben wird, was zu einem erhöhten Verschleiß und/oder kurzen Wartungsintervallen führt.

Zusätzlich zu den bereits ausgeführten Nachteilen bei der Mengenregelung ist die Mengenmessung nicht exakt. Der nach dem Schieber und vor dem eigentlichen Verteiler angeordnete Durchflussmesser liefert aufgrund der besonderen Zusammensetzung des flüssigen Wirtschaftsdüngers keine verlässlichen Daten. So unterscheiden sich beispielsweise Rinder-, Schweine- und Hühnergülle in Ihrer Konsistenz, so dass ein induktiver Durchflussmesser bei jeder Ladungsänderung neu kalibriert werden muss. Zudem wird häufig eine Mischung aus verschiedenen Güllearten durch Lohnunternehmer ausgebracht, was dazu führt, dass bei jeder Ladung eine Kalibrierung durchzuführen wäre. Schließlich enthält Gülle auch wechselnde Feststoffanteile, wie beispielsweise Sand oder Stroh, die in Abhängigkeit der Füllhöhe des Gülletanks sowie der Art der Tierhaltung stark variieren.

Ferner ist im Stand der Technik auch eine stufenlose Mengenregelung bekannt. Dabei ist zwischen der Zapfwelle und einer Verdrängerpumpe, eine Ölpumpe und einen Ölmotor vorgesehen, wobei die Ölpumpe von der Zapfwelle, der Ölmotor über die Ölpumpe und die Güllepumpe vom Ölmotor angetrieben wird. Diese hydrostatische Mengenregelung über ein Steuerventil hat den Nachteil, dass sie teuer, und aufgrund der zusätzlichen Hydraulikanlage und des Ölkreislauf schwer ist, was sich nachteilig auf die Nutzlast auswirkt.

Der Erfindung liegt die Aufgabe zugrunde, ein landwirtschaftliches Gerät der eingangs beschriebenen Art zu schaffen, das die genannten Nachteile vermeidet, die Ausbringung von flüssigem Wrtschaftsdünger, insbesondere Gülle, vereinfacht und eine gleichmäßige, bedarfsgerechte Verteilung der Gülle gewährleistet.

Diese Aufgabe wird bei einem landwirtschaftlichen Gerät der eingangs beschriebenen Art gelöst, das gekennzeichnet ist durch eine Recheneinrichtung zur Berechnung der Drehzahl einer Zapfwelle in Abhängigkeit der auszubringenden Menge an Dünger, der Fahrgeschwindigkeit und der jeweiligen Arbeitsbreite, und einen Datenbus zur Übertragung der Daten zu einem Traktor.

Die Erfindung verfolgt das Prinzip, die zum Verteiler geförderte Menge an Gülle in Abhängigkeit der auszubringenden Menge, der Fahrgeschwindigkeit, der jeweiligen Arbeitsbreite und gegebenenfalls weiterer Störgrößen über die Drehzahl einer Zapfwelle und des definierten Fördervolumens einer Verdrängerpumpe zu regeln. Erfindungsgemäß wird dabei ausgenützt, dass Verdrängerpumpen ein definiertes Fördervolumen pro Umdrehung, beispielsweise 10 Liter/Umdrehung, aufweisen. Die Drehzahl der Zapfwelle ist in Stufen, bevorzugt jedoch stufenlos regelbar.

Auf Grundlage der vorab oder während des Ausbringens berechneten oder bestimmten, auszubringenden Menge an Gülle pro Flächeneinheit, kann über die Drehzahl der Zapfwelle die Mengenregelung in Abhängigkeit der Fahrgeschwindigkeit und der jeweiligen Arbeitsbreite erfolgen.

Die Messung der Fahrgeschwindigkeit kann entweder am Traktor oder am landwirtschaftlichen Gerät erfolgen. Ist die Geschwindigkeitsmesseinrichtung am landwirtschaftlichen Gerät angeordnet, werden die Daten direkt der Recheneinrichtung übermittelt; ist die Geschwindigkeitsmesseinrichtung am Traktor angeordnet, werden die Daten über den Datenbus (ISOBUS) zur Recheneinrichtung des landwirtschaftlichen Geräts übertragen.

Der Antrieb der Verdrängerpumpe erfolgt unmittelbar über die Zapfwelle. Denkbar ist aber auch eine mittelbare Ankopplung, beispielsweise kann eine einfache Kupplung zwischen der Zapfwelle und der Verdrängerpumpe oder ein zwischengeschaltetes Getriebe vorhanden sein. Als Verdrängerpumpen werden, aufgrund der besonderen Zusammensetzung und Eigenschaften von Gülle, bevorzugt Drehkolben- oder Exzenterschneckenpumpen eingesetzt. Als Verteiler dient beispielsweise ein Schleppschlauchverteiler oder Gülleinjektor.

Die im Stand der Technik erforderliche Durchflussmengenmessung und der aufwendige hydrostatische Antrieb einer Güllepumpe können damit entfallen. Die erfindungsgemäße Regelung der zum Verteiler geförderten Menge über eine drehzahlgeregelte Zapfwelle ist zudem sehr schnell, so dass sich eine erforderliche Änderung des Fördervolumens, beispielsweise durch eine Breitenabschaltung oder eine verlangsamte Bergfahrt, unverzüglich am Verteiler auswirkt. Zudem wird gegenüber einer hydrostatischen Regelung Gewicht eingespart, was sich positiv auf die Nutzlast, auswirkt.

Vor dem Ausbringen des flüssigen Wirtschaftsdüngers wird die auszubringende Menge pro Flächeneinheit, beispielsweise anhand von Erfahrungswerten, der Fruchtart und/oder der Jahreszeit bestimmt, oder anhand einer Analyse der Zusammensetzung berechnet. Steht die auszubringende Menge pro Flächeneinheit, beispielsweise 20 Kubikmeter Gülle pro Hektar oder 40 kg Stickstoff pro Hektar fest, wird noch die Arbeitsbreite, beispielsweise 12 m in der Recheneinrichtung, in der Regel in einem Computer, abgespeichert.

Während des Ausbringens des Düngers berechnet die Recheneinrichtung die Drehzahl der Zapfwelle in Abhängigkeit der Fahrgeschwindigkeit und übermittelt die Daten über den Datenbus an eine Steuereinheit des Traktors. Sobald sich die Fahrgeschwindigkeit ändert, oder eine Breitenabschaltung erfolgt, beispielsweise auf 6 m Arbeitsbreite, erfolgt eine Neuberechnung der Drehzahl der Zapfwelle.

Da sich die Zusammensetzung der Gülle, insbesondere im Hinblick auf die Nährstoffanteile mit der Entleerung des Tanks ändert, kann es vorteilhaft sein, die auszubringende Menge für eine optimale Versorgung der zu düngenden Nutzfläche auch während des Ausbringens stetig neu zu berechnen.

In einer Weiterbildung des erfindungsgemäßen landwirtschaftlichen Geräts werden daher die Inhaltsstoffe des flüssigen Wirtschaftsdüngers während des Ausbringens, über einen Nährstoffsensor bestimmt. Der Sensor ist bevorzugt im Tank oder im Druckleitungssystem angebracht und über eine Datenleitung mit der Recheneinrichtung verbunden. Damit kann über einen düngerspezifischen Parameter die auszubringende Menge, insbesondere im Hinblick auf den Stickstoffgehalt noch exakter bestimmt werden.

Während des Ausbringens des Düngers berechnet die Recheneinrichtung die Drehzahl der Zapfwelle in Abhängigkeit des vom Sensor bestimmten Nährstoffanteil, insbesondere des Stickstoffanteils, der Fahrgeschwindigkeit und der jeweiligen Arbeitsbreite, und übermittelt die Daten an eine Steuereinheit des Traktors. Sobald sich der, vorzugsweise in der Druckleitung stetig bestimmte Nährstoffanteil oder die Fahrgeschwindigkeit ändert, oder eine Breitenabschaltung erfolgt, erfolgt eine Neuberechnung der Drehzahl der Zapfwelle.

Die daraus resultierende Anpassung der zum Verteiler zu fördernden Menge, d.h. die Regelung der Drehzahl der Zapfwelle erfolgt in dieser Weiterbildung unter Berücksichtigung einer variablen auszubringenden Menge, der Fahrgeschwindigkeit, der jeweiligen Arbeitsbreite, und gegebenenfalls weiterer Störgrößen.

Unabhängig von der Belastung der Zugmaschine, insbesondere des Traktors, oder einer momentan veränderten Leistungsaufnahme der Verdrängerpumpe, beispielsweise durch eine abweichende Konsistenz der Gülle, sollte die Drehzahl der Zapfwelle zu jedem Zeitpunkt mit der berechneten Drehzahl der Zapfwelle übereinstimmen.

Daher ist es vorteilhaft, dass der Traktor, eine Steuereinheit, insbesondere eine elektronische Steuereinheit mit zumindest einem Sensor zur Erfassung der Drehzahl der Zapfwelle aufweist. Der vom Sensor erfasste Ist-Wert wird mit dem Soll-Wert abgeglichen, und über die Steuereinheit die Drehzahl der Zapfwelle geregelt. Durch diesen Soll-Ist-Wert-Vergleich ist es in vorteilhafter Weise möglich, die Drehzahl, konstant zu halten und Schwankungen auszuregeln.

Um den Verschleiß der Verdrängerpumpe zu minimieren, kann es weiterhin vorteilhaft sein, dass ein optimiertes Anlaufen der Pumpe über die elektronische Steuereinheit gesteuert wird. Damit wird ein abruptes Zuschalten der Zapfwelle vermieden und ein für die Pumpe betriebsschonendes Hochfahren der Drehzahl möglich.

Die drehzahlgeregelte Zapfwelle kann beispielsweise über einen stufenlosen Wandler, insbesondere über einen Kettenwandler, mit dem Antriebsmotor des Traktors unter Zwischenschaltung eines Getriebes verbunden sein. Die drehzahlgeregelte Zapfwelle kann auch von einem Elektromotor angetrieben werden. Beispielsweise kann ein von einem Verbrennungsmotor angetriebener Generator die elektrische Energie für den Elektromotor liefern. Alternativ oder ergänzend kann als elektrische Energiequelle für den Elektromotor auch eine Brennstoffzelle dienen, die gegebenenfalls mit einem Inverter, der den Gleichstrom der Brennstoffzelle in Drehstrom umwandelt, gekoppelt ist.

Die Aufgabe der Erfindung wird auch gelöst von einem landwirtschaftlichen Gespann mit einem Traktor mit einer drehzahlgeregelten Zapfwelle, einer Geschwindigkeitsmesseinrichtung und einem landwirtschaftlichen Gerät mit einer Förderanordnung für flüssigen Wirtschaftsdünger, insbesondere Gülle, mit einem mit Dünger befüllbaren Tank, einem Druckleitungssystem, zumindest einem Verteiler zum Ausbringen des Düngers auf eine landwirtschaftliche Fläche und einer Verdrängerpumpe mit einem definierten Fördervolumen zum Fördern der Gülle zu dem Verteiler, das gekennzeichnet ist durch eine Recheneinrichtung zur Berechnung der Drehzahl der Zapfwelle in Abhängigkeit der auszubringenden Menge an Dünger, der Fahrgeschwindigkeit und der jeweiligen Arbeitsbreite, und durch einen Datenbus zur Übertragung der Daten zu dem Traktor.

## Patentansprüche

1. Mit einem Traktor verbindbares landwirtschaftliches Gerät mit einer Förderanordnung für flüssigen Wirtschaftsdünger, insbesondere Gülle, mit einem mit Dünger befüllbaren Tank, einem Druckleitungssystem, zumindest einem Verteiler zum Ausbringen des Düngers auf eine landwirtschaftliche Fläche und einer Verdrängerpumpe mit einem definierten Fördervolumen zum Fördern der Gülle zu dem Verteiler, wobei die Verdrängerpumpe über eine drehzahlgeregelte Zapfwelle eines Traktors betreibbar ist, **gekennzeichnet durch** eine Recheneinrichtung zur Berechnung der Drehzahl der Zapfwelle in Abhängigkeit der auszubringenden Menge an Dünger, der Fahrgeschwindigkeit und der jeweiligen Arbeitsbreite, und **durch** einen Datenbus zur Übertragung der Daten zu dem Traktor.

2. Landwirtschaftliches Gerät nach Anspruch 1, **dadurch gekennzeichnet, dass** die Verdrängerpumpe als Drehkolben- oder Exzenterschneckenpumpe ausgebildet ist.

3. Landwirtschaftliches Gerät nach Anspruch 1 oder 2, **dadurch gekennzeichnet, dass** der Verteiler als Schleppschlauchverteiler oder Gülleinjektor ausgebildet ist.

4. Landwirtschaftliches Gerät nach einem der Ansprüche 1 bis 3, **gekennzeichnet durch** eine Messeinrichtung zur Messung der Fahrgeschwindigkeit.

5. Landwirtschaftliches Gerät nach einem der Ansprüche 1 bis 4, **gekennzeichnet durch** einen Nährstoffsensor zur Bestimmung der Inhaltsstoffe des flüssigen Wirtschaftsdüngers.

6. Landwirtschaftliches Gespann mit einem Traktor mit einer drehzahlgeregelten Zapfwelle und einem Gerät nach einem der Ansprüche 1 bis 5.

7. Landwirtschaftliches Gespann nach Anspruch 6, **dadurch gekennzeichnet, dass** die drehzahlgeregelte Zapfwelle über einen stufenlosen Wandler, mit dem Antriebsmotor des Traktors unter Zwischenschaltung eines Getriebes verbunden ist.

8. Landwirtschaftliches Gespann nach Anspruch 6, **dadurch gekennzeichnet, dass** die drehzahlgeregelte Zapfwelle von einem Elektromotor angetrieben wird.

9. Landwirtschaftliches Gespann nach Anspruch 8, **gekennzeichnet durch** eine Steuereinheit, insbesondere eine elektronische Steuereinheit mit zumindest einem Sensor zur Erfassung der Drehzahl der Zapfwelle.
